(19) Europäisches Patentamt
European Patent Office
Office européen des brevets

(11) EP 4 114 066 A1

(12) EUROPEAN PATENT APPLICATION
published in accordance with Art. 153(4) EPC

(43) Date of publication:
04.01.2023 Bulletin 2023/01

(51) International Patent Classification (IPC):
H04W 16/14 (2009.01)    H04W 72/04 (2009.01)
H04W 72/12 (2009.01)    H04L 27/26 (2006.01)

(21) Application number: 21760677.1

(22) Date of filing: 08.02.2021

(52) Cooperative Patent Classification (CPC):
H04L 27/26; H04W 16/14; H04W 72/04;
H04W 72/12

(86) International application number:
PCT/JP2021/004676

(87) International publication number:
WO 2021/171995 (02.09.2021 Gazette 2021/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.02.2020  JP 2020029585

(71) Applicant: NTT DOCOMO, INC.
Chiyoda-Ku
Tokyo 100-6150 (JP)

(72) Inventors:
• KUMAGAI, Shinya
  Tokyo 100-6150 (JP)
• HARADA, Hiroki
  Tokyo 100-6150 (JP)
• NAGATA, Satoshi
  Tokyo 100-6150 (JP)

(74) Representative: Hoffmann Eitle
Patent- und Rechtsanwälte PartmbB
Arabellastraße 30
81925 München (DE)

(54) **TERMINAL, COMMUNICATION METHOD, AND BASE STATION**

(57) A terminal includes a receiving unit that receives, from a base station, a plurality of signals for assigning a resource for an uplink transmission; a control unit that configures, upon receiving the plurality of signals, at least one of a channel access type for the uplink transmission or a CP extension value for the uplink transmission based on an index included in one or more signals of the plurality of signals; and a transmitting unit that executes the uplink transmission by applying the at least one of the configured channel access type or the configured CP extension value.

FIG.13

**Description**

TECHNICAL FIELD

The present invention relates to a terminal, a communication method, and a base station in a radio communication system.

BACKGROUND ART

In New Radio (NR) (which is also referred to as "5G") that is a successor system to Long Term Evolution (LTE), technology has been studied that meets the requirements, such as a requirement on large capacity system, a requirement on a high data transmission rate, a requirements on low latency, a requirement on simultaneous connection of multiple terminals, a requirement on low cost, and a requirement on power saving.

For an existing LTE system, in order to extend a frequency band, utilization of a frequency band (which may also be referred to as an unlicensed band, an unlicensed carrier, or an unlicensed CC) that differs from a frequency band licensed to a telecommunication operator (licensed band) is supported. As unlicensed bands, for example, the 2.4 GHz band or the 5 GHz band, the 6 GHz band, and the like are assumed on which Wi-Fi (registered trademark) or Bluetooth (registered trademark) can be used.

Specifically, for Rel-13, a carrier aggregation (Carrier Aggregation: CA) is supported which aggregates a carrier (CC) of a licensed band and a carrier (CC) of an unlicensed band. A communication that is performed using a licensed band and an unlicensed band, such as that described above, is called License-Assisted Access (LAA).

In a radio communication system in which a communication is performed using a license band and an unlicensed band, prior to a data transmission on the unlicensed band, a base station device (downlink) and a user terminal (uplink) perform channel sensing (carrier sensing) to confirm presence or absence of a transmission by another device (e.g., a base station device, a user terminal, a Wi-Fi device, or the like). After confirming, as a result of the sensing, that there is no transmission by another device, a transmission occasion can be obtained and a transmission can be performed. This operation is referred to as Listen Before Talk (LBT). In NR, a system that supports an unlicensed band is referred to as an NR-U system.

Related Art Document

[Non-Patent Document]

Non-Patent Document 1: 3GPP TS 38.331 V15.8.0 (2019-12)
Non-Patent Document 2: 3GPP TS 38.212 V16.0.0 (2019-12)
Non-Patent Document 3: 3GPP TS 38.213 V16.0.0 (2019-12)
Non-Patent Document 4: 3GPP TS 37.213 V16.0.0 (2019-12)

SUMMARY OF THE INVENTION

[PROBLEM TO BE SOLVED BY THE INVENTION]

For an NR-U PUCCH transmission, there is a need for a technique with which a terminal 20 can configure, when Channel access types and CP extension values are signalled with a plurality of DCIs for the same PUCCH, an appropriate Channel access type/an appropriate CP extension value for the PUCCH.

[MEANS FOR SOLVING THE PROBLEM]

According to an aspect of the present invention, there is provided a terminal including a receiving unit that receives, from a base station, a plurality of signals for assigning a resource for an uplink transmission; a control unit that configures, upon receiving the plurality of signals, at least one of a channel access type for the uplink transmission or a CP extension value for the uplink transmission based on an index included in one or more signals of the plurality of signals; and a transmitting unit that executes the uplink transmission by applying the at least one of the configured channel access type or the configured CP extension value.

[ADVANTAGE OF THE INVENTION]

According to an embodiment, for an NR-U PUCCH transmission, a technique is provided with which a terminal 20 can configure, when channel access types and CP extension values are signalled with a plurality of DCIs for the same PUCCH, an appropriate channel access type/an appropriate CP extension value for the PUCCH.

BRIEF DESCRIPTION OF DRAWINGS

Fig. 1 is a diagram illustrating an example of a configuration of a radio communication system in an embodiment of the present invention.
Fig. 2 is a diagram for illustrating a radio communication system in an embodiment of the present invention.
Fig. 3 is a diagram for illustrating a Multi-TTI grant.
Fig. 4 is a sequence diagram for illustrating an example of a signalling in an embodiment of the present invention.
Fig. 5 is a flowchart for illustrating an operation example (1) of a terminal 20 in an embodiment of the present invention.
Fig. 6 is a flowchart for illustrating an operation example (2) of a terminal 20 in an embodiment of the present invention.
Fig. 7 is a flowchart for illustrating an operation example (3) of a terminal 20 in an embodiment of the present invention.
Fig. 8 is a diagram for illustrating an example of a CP extension in an embodiment of the present invention.
Fig. 9 is a diagram illustrating an example of a functional configuration of a base station 10 according to an embodiment of the present invention.
Fig. 10 is a diagram illustrating an example of a functional configuration of a terminal 20 according to an embodiment of the present invention.
Fig. 11 is a diagram illustrating a hardware configuration of a base station 10 or a terminal 20 according to an embodiment of the present invention.
Fig. 12 is a diagram illustrating an example of a case in which channel access types/CP extension values are signalled with a plurality of DCIs for a same transmission on a PUCCH by a terminal.
Fig. 13 is a diagram illustrating an example of a case in which channel access types/CP extension values are signalled with a plurality of DCIs for a same transmission on a PUCCH by a terminal.
Fig. 14 is a diagram illustrating an example of a case in which channel access types/CP extension values are signalled with a plurality of DCIs for a same transmission on a PUCCH by a terminal.

[EMBODIMENTS OF THE INVENTION]

In the following, embodiments of the present invention are described by referring to the drawings. Note that the embodiments described below are an example, and embodiments to which the present invention is applied are not limited to the following embodiments.

In an operation of a radio communication system of an embodiment of the present invention, existing technology is appropriately used. Here, the existing technology is, for example, existing LTE but not limited to the existing LTE. Furthermore, the term "LTE" used in this specification has a broad meaning including LTE-Advanced and a system subsequent to LTE-Advanced (for example, NR), unless as otherwise specified.

In the embodiments of the present invention described below, terms used in the existing LTE are used, such as Synchronization signal (SS), Primary SS (PSS), Secondary SS (SSS), Physical broadcast channel (PBCH), Physical random access channel (PRACH), Physical Downlink Control Channel (PDCCH), Physical Downlink Shared Channel (PDSCH), Physical Uplink Control Channel (PUCCH), Physical Uplink Shared Channel (PUSCH), and the like. This is for convenience of description, and signals, functions, and the like, similar to these may be referred to by other names. The above-described terms in NR correspond to NR-SS, NR-PSS, NR-SSS, NR-PBCH, NR-PRACH, and the like. However, even if a signal is used for NR, the signal is not always specified as "NR-."

In the embodiments of the present invention, a duplex method may be a Time Division Duplex (TDD) method, a Frequency Division Duplex (FDD) method, or any other method (e.g., Flexible Duplex).

In the embodiments of the present invention, "configuring" a radio parameter, or the like, may be "pre-configuring" a predetermined value, or configuring a radio parameter transmitted from a base station 10 or a terminal 20.

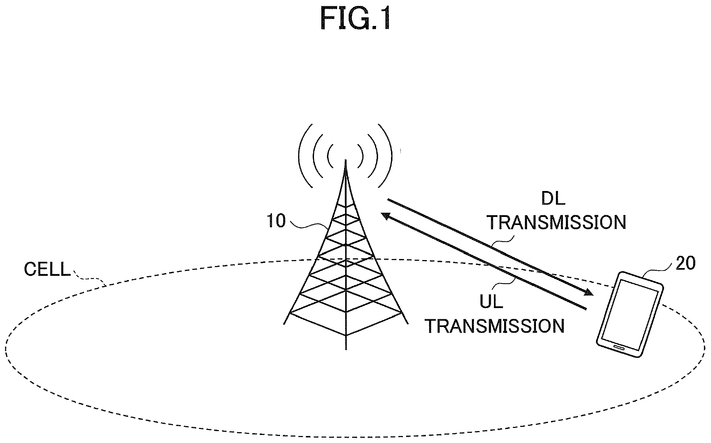

Fig. 1 is a diagram illustrating an example of a configuration of a radio communication system according to an embodiment of the present invention. As illustrated in Fig. 1, the radio communication system according to the embodiment of the present invention includes a base station 10 and a terminal 20. In Fig. 1, one base station 10 and one terminal 20 are illustrated. However, this is an example, and there may be a plurality of base stations 10 and a plurality of terminals 20.

The base station 10 provides one or more cells, and the base station 10 is a communication device for performing radio communication with the terminal 20. A physical resource of a radio signal may be defined in a time domain and a frequency domain, the time domain may be defined in terms of a number of Orthogonal Frequency Division Multiplexing (OFDM) symbols, and the frequency domain may be defined in terms of a number of subcarriers or a number of resource blocks. The base station 10 transmits a synchronization signal and system information to the terminal 20. The synchronization signal is, for example, NR-PSS and NR-SSS. The system information is transmitted, for example, on a NR-PBCH, and the system information is also referred to as broadcast information. As illustrated in Fig. 1, the base station 10 transmits a control signal or data to the terminal 20 on Downlink (DL), and the base station 10 receives a control signal or data from the terminal 20 on Uplink (UL). Each of the base station 10 and the terminal 20 can transmit and receive signals by performing beamforming. Furthermore, the base station 10 and the terminal 20 can apply Multiple Input Multiple Output (MIMO) based communication to DL or UL. Furthermore, the base station 10 and the terminal 20 may perform communication through a secondary cell (SCell: Secondary Cell) and a primary cell (PCell: Primary Cell) that are configured based on Carrier Aggregation (CA). Furthermore, the terminal 20 may perform communication through a primary cell of the base station 10 and a primary secondary cell (PSCell: Primary Secondary Cell) of another base station 10 that are configured based on Dual Connectivity (DC).

The terminal 20 is a communication device provided with a radio communication function, such as a smartphone, a cellular phone, a tablet, a wearable terminal, a communication module for Machine-to-Machine (M2M), or the like. As illustrated in FIG. 1, the terminal 20 utilizes various communication services provided by a radio communication system by receiving control signals or data in DL from the base station 10 and transmitting control signals or data in UL to the base station 10.

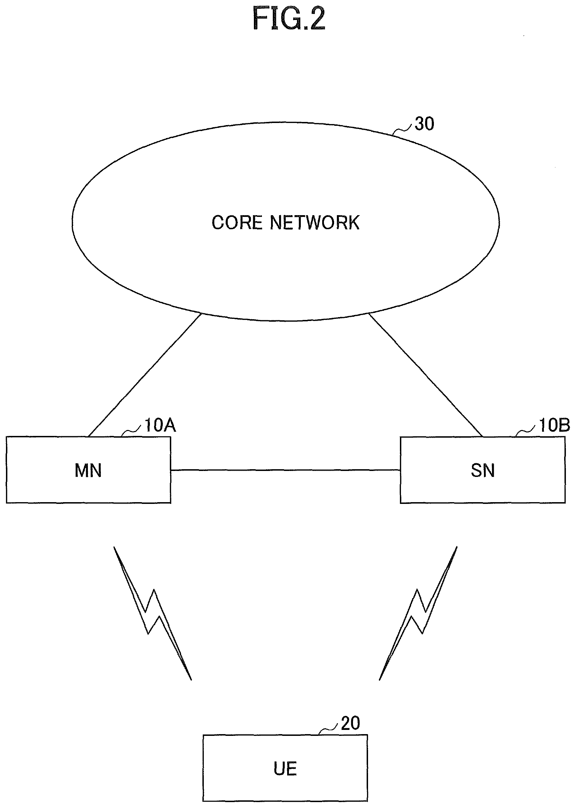

Fig. 2 is a diagram for illustrating a radio communication system according to an embodiment of the present invention. Fig. 2 shows a configuration example of a radio communication system when NR-Dual connectivity (NR-DC) is executed. As illustrated in Fig. 2, a base station 10A serving as a Master Node (MN) and a base station 10B serving as a Secondary Node (SN) are provided. Each of the base station 10A and the base station 10B is connected to a core network 30. The terminal 20 communicates with both of the base station 10A and the base station 10B.

A cell group provided by the base station 10A that is the MN is called a Master Cell Group (MCG), and a cell group provided by the base station 10B that is the SN is called a Secondary Cell Group (SCG). The operations described below may be performed in any of the configurations of Fig. 1 and Fig. 2.

In the radio communication system according to the embodiment, the above-described LBT is executed. The base station 10 or the terminal 20 obtains a Channel Occupancy Time (COT) when a LBT result is idle (when the LBT is successful) and performs a transmission. The base station 10 or the terminal 20 does not perform a transmission when a LBT result is busy (LBT-busy).

The radio communication system according to the embodiment may perform a carrier aggregation (CA) operation using an unlicensed CC and a licensed CC; may perform a dual connectivity (DC) operation using an unlicensed CC and a licensed CC; or may perform a stand-alone (SA) operation using an unlicensed CC alone. CA, DC, or SA may be performed by one or more of an NR system and an LTE system. DC may be performed by two or more of NR, LTE, and another system.

The terminal 20 may assume presence of a signal (e.g., a Reference Signal (RS), such as Demodulation Reference Signal (DMRS)) in a PDCCH or a group common PDCCH (group common (GC)-PDCCH) for detecting a transmit burst from the base station 10.

The base station 10 may transmit, at a start of a base station device triggered COT, a specific PDCCH (PDCCH or GC-PDCCH) including a specific DMRS for indicating to start the COT. One or more of a specific PDCCH and a specific DMRS may be referred to as a COT start indication signal. For example, the base station 10 transmits a COT start indication signal to one or more terminals 20, and the terminal 20 can recognize the COT in response to detecting a specific DMRS.

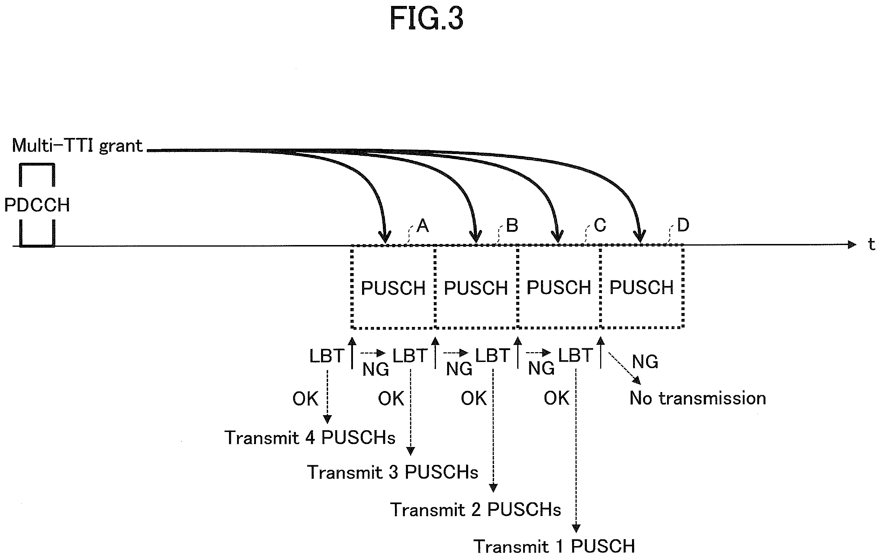

Fig. 3 is a diagram for illustrating a multi-TTI grant. For Release 16 NR-U, a multi-TTI grant is assumed to be used such that a plurality of PUSCHs over a plurality of slots/a plurality of mini-slots is scheduled by a single item of Downlink Control Information (DCI). Note that "scheduling (or to schedule)" may be replaced with "assigning."

By a multi-TTI grant, a plurality of contiguous PUSCHs for transmitting separate Transport Blocks (TBs) is scheduled. One TB is mapped to one slot or one mini-slot, and the one TB is transmitted on one PUSCH. One hybrid automatic repeat request (HARQ) process is assigned to the one PUSCH for transmitting the one TB.

For multiple PUSCHs scheduled by one DCI, New data indicator (NDI) and Redundancy version (RV) are signaled per PUSCH by the one DCI. A HARQ process ID signalled by the DCI is applied to a first PUSCH scheduled. For HARQ process IDs for the subsequent PUSCHs, values obtained by sequentially incrementing the signaled value by one in the order of the PUSCHs are applied.

Fig. 3 is a diagram illustrating an example of an operation of the terminal 20 receiving a multi-TTI grant. In the example of Fig. 3, the multi-TTI grant schedules PUSCHs for four slots.

The terminal 20 executes LBT before the slot indicated by A for which the first PUSCH is scheduled, and the terminal 20 transmits data on four consecutive PUSCHs if the LBT is OK. If the first LBT is NG, LBT is executed before the slot indicated by B for which the PUSCH is scheduled, and data is transmitted on three consecutive PUSCHs if the LBT is OK. Subsequently, the same process is executed. If LBT is executed before the slot indicated by D for which the PUSCH is scheduled and the LBT is NG, no transmission is performed.

For example, in PUSCH scheduling, a single DCI may support a plurality of slots or a plurality of mini-slots including a plurality of consecutive PUSCHs that may include a separated plurality of TBs. For example, DCI for signalling a plurality of PUSCHs may include NDI and RV. For example, code block group (CGB)-based retransmissions may be supported in multiple PUSCH scheduling, and the CGB-based retransmissions may be signalled by a DCI field on a per one PUSCH or multiple PUSCHs to be transmitted basis, on a per PUSCH basis, or on a per fixed number of PUSCHs basis. For example, the HARQ process ID signalled by DCI may be applied to a first scheduled PUSCH, and the HARQ process ID may be incremented by one on a per subsequent PUSCH basis.

For example, a resource assignment in a time domain for scheduling a PUSCH may be extended. For example, a range of a start symbol position and an end symbol position may be extended, consecutive resource assignments in a time domain may be extended, a plurality of PUSCHs may be allocated in a first slot, or a plurality of start symbol positions may be supported in a terminal-initiated COT.

Furthermore, in NR-U, an LBT gap based on Cyclic Prefix extension (CP extension) has been studied for a UL transmission by a terminal. For example, at least for a CP extension prior to a dynamically scheduled Physical Uplink Shared Channel (PUSCH) transmission, a CP extension may be allocated to a symbol preceding a PUSCH assignment signalled by a Start and Length Indicator (SLIV). A duration of a supported CP extension may be any one of the following 1)-4).

1) 0 (i.e., CP extension is not applied)
2) $C1 \times$ symbol length - 25 $\mu$s
3) $C2 \times$ symbol length - 16 $\mu$s - TA (Timing Advance)
4) $C3 \times$ symbol length - 25 $\mu$s - TA

The above-described C1, C2, and C3 may be values that are set in accordance with SubCarrier spacing (SCS). For example, when SCS is 15 kHz or 30 kHz, C1 may be fixedly set to 1. For example, when SCS is 60 kHz, C1 may be fixedly set to 2. C2 or C3 may be fixedly set based on a TA value per SCS, or C2 or C3 may be implicitly derived.

A value N2 used for calculation of a minimum delay from a UL grant to a PUSCH transmission may be increased considering the CP extension. A CP extension for specific SCS may be limited to less than or equal to one symbol, or may exceed one symbol. The above-described CP extension may be applied to another UL transmission. A number of CP extension periods that are dynamically signalled to the terminal 20 may be configurable.

C2 and C3 may be dedicatedly configured for the terminal 20 by RRC signalling. C2 and C3 may avoid limiting a maximum TA used in a cell. When SCS is 30 kHz, C2 may be set to a value from 1 to 28 and C3 may be set to a value from 1 to 28 by RRC signaling. When SCS is 60 kHz, C2 may be set to a value from 2 to 28 and C3 may be set to a value from 2 to 28 by RRC signaling. Here, regardless of the configuration related to above-described C2 and C3, another specification may remain unchanged.

In regard to a UL grant using non-fallback DCI, operations described in the following 1)-4) may be performed. Note that non-fallback DCI formats are, for example, a DCI format 1_1 and a DCI format 0_1 in an NR system. A non-fallback DCI format is, for example, a DCI format with a size that is greater than those of a DCI format 1_0 and a DCI format 0_0, which are fallback DCI formats. Unlike a fallback DCI format, a size of a non-fallback DCI format is changed depending on a configuration. In the following, "*" represents multiplication.

1) An LBT type, a CP extension value, and a Channel Access Priority Class (CAPC) may be jointly encoded (i.e., an index may be associated with a combination of these), and these may be included in the UL grant.
2) By RRC dedicated signalling to the terminal 20, the terminal 20 may be configured with a combination of an LBT type, a CP extension value, and a CAPC.
3) Among combinations of LBT types {Cat1-16 $\mu$s, Cat2-16 $\mu$s, Cat2-25 $\mu$s, Cat4}, CP extensions {0, C1 * symbol length - 25 $\mu$s, C2 * symbol length - 16 $\mu$s - TA, C3 * symbol length - 25 $\mu$s - TA}, and CAPCs {1, 2, 3, 4}, an RRC configuration may be used to configure so that the combinations of (Cat2-25 $\mu$s, C2 * symbol length - 16 $\mu$s - TA), (Cat1-16 $\mu$s, C3 * symbol length - 25 $\mu$s - TA), (Cat2-16 $\mu$s, C3 * symbol length - 25 $\mu$s - TA), and (Cat2-16 $\mu$s or Cat2-16 $\mu$s, C1 * symbol length - 25 $\mu$s) are not supported.
4) A length of a bit field of the corresponding DCI may be up to a length of 6 bits. Depending on a number of combinations configured for the terminal 20 using RRC signaling, a length of the bit field may be determined.

For a non-fallback DL assignment that schedules a UL transmission (e.g., PUCCH), the operations described in 1)-5) below may be performed.

1) An LBT type and a CP extension value may be jointly encoded, and these may be included in the DL grant.

2) The highest CAPC may always be assumed.

3) By RRC dedicated signalling to the terminal 20, the terminal 20 may be configured with a combination of an LBT type and a CP extension value.

4) Among combinations of LBT types {Cat1-16 μs, Cat2-16 μs, Cat2-25 μs, Cat4} and CP extensions {0, C1 * symbol length - 25 μs, C2 * symbol length - 16 μs - TA, C3 * symbol length - 25 μs - TA}, an RRC configuration may be used to configure so that the combinations of (Cat2-25 μs, C2 * symbol length - 16 μs - TA), (Cat1-16 μs, C3 * symbol length - 25 μs - TA), (Cat2-16 μs, C3 * symbol length - 25 μs - TA), and (Cat1-16 μs or Cat2-16 μs, C1 * symbol length - 25 μs) are not supported.

5) A length of a bit field of the corresponding DCI may be up to a length of 4 bits. Depending on a number of combinations configured for the terminal 20 using RRC signaling, a length of the bit field may be determined.

For a UL grant using fallback DCI, an LBT type, a CP extension value, and CAPC may be jointly encoded with a length of two bits, and these may be included in the UL grant. Here, a supported combination of an LBT type, a CP extension value, and a CAPC may be predefined in a specification.

For a fallback DL assignment for scheduling a UL transmission (e.g., PUCCH), an LBT type and a CP extension value may be jointly encoded with a length of two bits, and these may be included in the DL grant. Here, a supported combination of an LBT type and a CP extension value may be predefined in a specification.

As the mechanism of LBT, Frame Based Equipment (FBE) and Load Based Equipment (LBE) have been studied. The difference between the two is the frame structure used for transmission and reception, channel occupancy time, and the like. For the FBE, a configuration for transmission and reception for LBT includes a fixed timing. For the LBE, a configuration for transmission and reception for LBT is not fixed in a time axis direction, and LBT is performed on demand. Specifically, the FBE has fixed frame periodicity. As a result of performing carrier sensing for a constant time interval (which may be referred to as LBT duration), if a channel is available, a transmission is performed. However, if a channel is not available, a transmission is waited for until a timing for carrier sensing in a next frame.

For the LBE, an Extended CCA (ECCA) procedure is executed such that, as a result of performing carrier sensing (initial Clear Channel Assessment: CCA), if a channel is not available, a time for carrier sensing is extended, and carrier sensing is continuously performed until a channel becomes available. For the LBE, a random back off is necessary for appropriately avoiding a collision.

When LBT is operated in the LBE, signalling of a LBT type and a CP extension value for both of a fallback DL assignment and a fallback UL grant may be performed using Table 1, for example.

[Table 1]

| LBT Type | CP extension |
|---|---|
| Cat1 16 μs | C2*symbol length - 16 us - TA |
| Cat2 25 μs | C3*symbol length - 25 us - TA |
| Cat2 25 μs | C1*symbol length - 25 us |
| Cat4 | 0 |

The "Cat1," "Cat2," and "Cat4" shown in Table 1 correspond to category 1, category 2, and category 4, respectively. As shown in Table 1, when the LBT type is "Cat1 - 16 μs," the CP extension value may be "C2 * symbol length - 16 μs - TA." Furthermore, when the LBT type is "Cat2 - 25 μs," the CP extension value may be "C3 * symbol length - 25 μs - TA." Furthermore, when the LBT type is "Cat2 - 25 μs," the CP extension value may be "C1 * symbol length - 25 μs." Furthermore, when the LBT type is "Cat4," the CP extension value may be "0."

The CAPC need not be explicitly indicated. For a UL grant, the terminal 20 may assume CAPC = 4 that is used by the base station 10 to obtain a CO. Furthermore, for a COT initiated by the terminal 20, i.e., for the category 4, the terminal 20 may select a CAPC. Here, mapping between a CAPC and a traffic class may be the same as a mapping defined for a UL-Configured Grant (CG) transmission. When category 4 LBT is to be used, a CAPC with a highest priority level may be used for a PUCCH associated with a DL assignment.

When LBT is operated in the FBE, the terminal 20 that is signalled that the LBT type is "Cat2 - 25 μs" or "Cat4" may measure one slot of 9 μs for carrier sensing within duration of 25 μs.

In regard to a random access response (RAR), the terminal 20 may use a table (e.g., Table 1), of which an LBT type and a CP extension value are the same as those of the UL grant using the fallback DCI, and a CAPC selection method. For the above-described operation, two bits may be signalled through the RAR (i.e., a PDSCH). When the terminal 20 multiplexes user plane data on a PUSCH, the terminal 20 may assume that the base station 10 uses CAPC = 4 for obtaining a CO. Furthermore, for a COT initiated by the terminal 20, i.e., for category 4, the terminal 20 may select a CAPC. A mapping between a CAPC and a traffic class may be the same as a mapping defined for a UL-CG transmission. Furthermore, a field indicating a resource assignment in a frequency domain included in the RAR is reduced to accommodate the two bits.

For a CP extension of a first OFDM symbol 1 assigned to a PUSCH transmission, $T_{ext}$ [sec] is the CP extension period. Table 2 is an example in which $T_{ext}$ is indicated by an index per SCS.

[Table 2]

| Index | $\mu = 0$ | $\mu = 1$ | $\mu = 2$ |
|---|---|---|---|
| 0 | - | - | - |
| 1 | $T^{\mu}_{symb,l} - 25 \cdot 10^{-6}$ | $T^{\mu}_{symb,l} - 25 \cdot 10^{-6}$ | $2T^{\mu}_{symb,l} - 25 \cdot 10^{-6}$ |
| 2 | $C_2 T^{\mu}_{symb,l} - 16 \cdot 10^{-6} - T_{TA}$ | $C_2 T^{\mu}_{symb,l} - 16 \cdot 10^{-6} - T_{TA}$ | $C_2 T^{\mu}_{symb,l} - 16 \cdot 10^{-6} - T_{TA}$ |
| 3 | $C_3 T^{\mu}_{symb,l} - 25 \cdot 10^{-6} - T_{TA}$ | $C_3 T^{\mu}_{symb,l} - 25 \cdot 10^{-6} - T_{TA}$ | $C_3 T^{\mu}_{symb,l} - 25 \cdot 10^{-6} - T_{TA}$ |

In Table 2, $\mu = 0$ corresponds to 15 kHz SCS, $\mu = 1$ corresponds to 30 kHz SCS, $\mu = 2$ corresponds to 60 kHz SCS, $T_{symb,1\mu}$ corresponds to a symbol lenght for $\mu$ and a sumbol position of 1, and $T_{TA}$ corresponds to a timing advance value. As shown in Table 2, $T_{ext}$ corresponding to the index 0 is not defined.

The index 1 corresponds to "symbol length - 25 * $10^{-6}$" for 15kHz SCS; "symbol length - 25 * $10^{-6}$" for 30kHz SCS; and "2 * symbol length - 25 * $10^{-6}$" for 60kHz SCS.

The index 2 corresponds to "$C_2$ * symbol length - 16 * $10^{-6}$ - $T_{TA}$" for any of 15kHz SCS, 30kHz, and 60kHz. Namely, a CP extension is determined depending on a timing advance value.

The index 3 corresponds to "$C_3$ * symbol length - 25 * $10^{-6}$ - $T_{TA}$" for any of 15kHz SCS, 30kHz, and 60kHz. Similar to the index 2, a CP extension is determined depending on a timing advance value.

For 15kHz SCS or 30kHz SCS, C2 may be any integer value from 1 to 28, and C3 may be any integer value from 1 to 28. For 60kHz SCS, C2 may be any integer value from 2 to 28 and C3 may be any integer value from 2 to 28.

While the CP extension is applied as described above, depending on a communication condition, the terminal 20 is to determine duration of the CP extension prior to executing an RRC configuration. For example, a time of RAR, a time of a UL grant using fallback DCI, and a time of a DL assignment using fallback DCI are the communication conditions. During these communication conditions, the terminal 20 does not know C2 and C3 used for a UL transmission.

Accordingly, for a UL transmission in NR-U, a CP extension value may be appropriately determined even if the timing is before executing an RRC configuration.

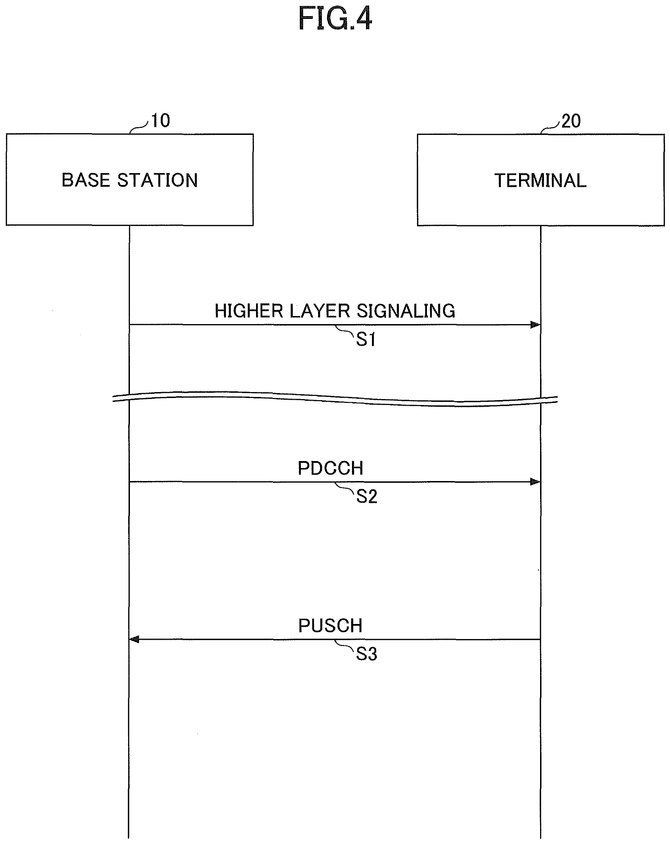

Fig. 4 is a sequence diagram for illustrating an example of signalling in an embodiment of the present invention. The base station 10 may indicate a PUSCH transmission and/or a PUCCH transmission or configure a transmission occasion to the terminal 20 by step S1 and step S2. The terminal 20 may, for example, appropriately determine a CP extension value, even if the timing is prior to executing an RRC configuration by step S1.

At step S1, the base station 10 signals a configuration of a PUSCH and/or a configuration of a PUCCH to the terminal 20 through higher layer signalling. For example, a configuration of a CP extension may be signalled.

At step S2, the base station 10 transmits, to the terminal 20, a UL grant using DCI through a PDCCH. Subsequently, the terminal 20 transmits, to the base station 10, data through the PUSCH determined based on the received DCI (S3). When a CP extension value is signalled with the DCI, the terminal 20 may apply the CP extension to the PUSCH and perform the transmission.

As another example, at step S2, the base station 10 transmits a DL assignment using DCI to the terminal 20 through a PDCCH. Subsequently, the terminal 20 transmits uplink control information (UCI) to the base station 10 through the PUCCH determined based on the received DCI (S3). When a CP extension value is signalled with the DCI, the terminal 20 may apply the CP extension to the PUCCH and perform the transmission.

As another example, at step S2, the base station 10 transmits a RAR to the terminal 20 through a PDSCH. Subsequently, the terminal 20 transmits data to the base station 10 through the PUSCH determined based on the received RAR (S3). When a CP extension value is signalled with the RAR, the terminal 20 may apply the CP extension to the PUSCH and perform the transmission.

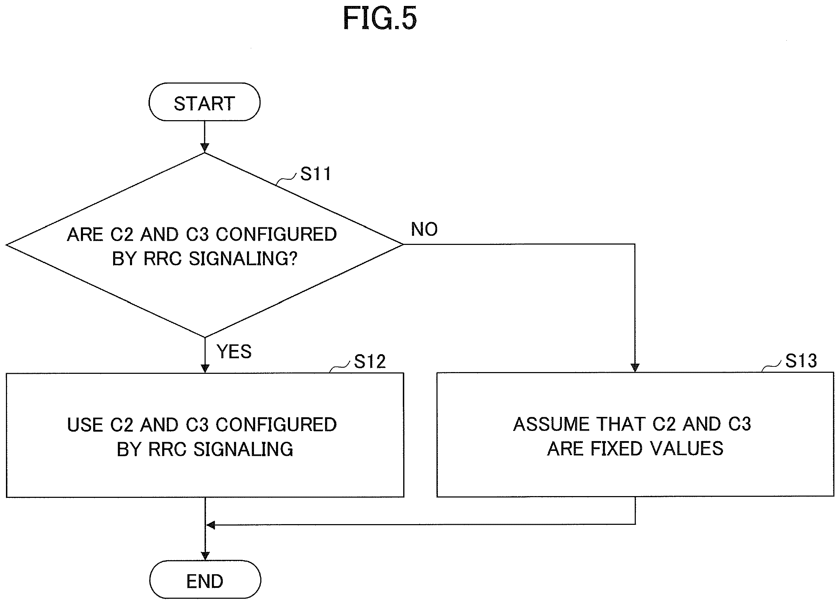

Fig. 5 is a flowchart for illustrating an operation example (1) for the terminal 20 in an embodiment of the present invention. At step S11, the terminal 20 determines whether C2 and C3 are configured by RRC signalling. If these are configured (YES at S11), the process proceeds to step S12. If these are not configured (NO at S11), the process proceeds to step S13.

At step S12, the terminal 20 uses C2 and C3 configured by the RRC signalling for determining the CP extension value. At step S13, the terminal 20 determines the CP extension value while assuming that C2 and C3 are predefined fixed values.

For example, at step S13, for 15kHz SCS or 30kHz SCS, the fixed value of C2 may be selected from any of integer values from 1 to 28 and the fixed value of C3 may be selected from any of integer values from 1 to 28. For 60kHz SCS, the fixed value of C2 may be selected from any of integer values from 2 to 28 and the fixed value of C3 may be selected from any of integer values from 2 to 28.

Furthermore, for example, at step S13, when a defined fixed value is assumed for C2 and "C2 * symbol length - 16 μs - TA < 0" is satisfied, the CP extension value may be assumed to be zero. For example, at step S13, when a defined fixed value is assumed for C3 and "C3 * symbol length - 25 μs - TA < 0" is satisfied, the CP extension value may be assumed to be zero.

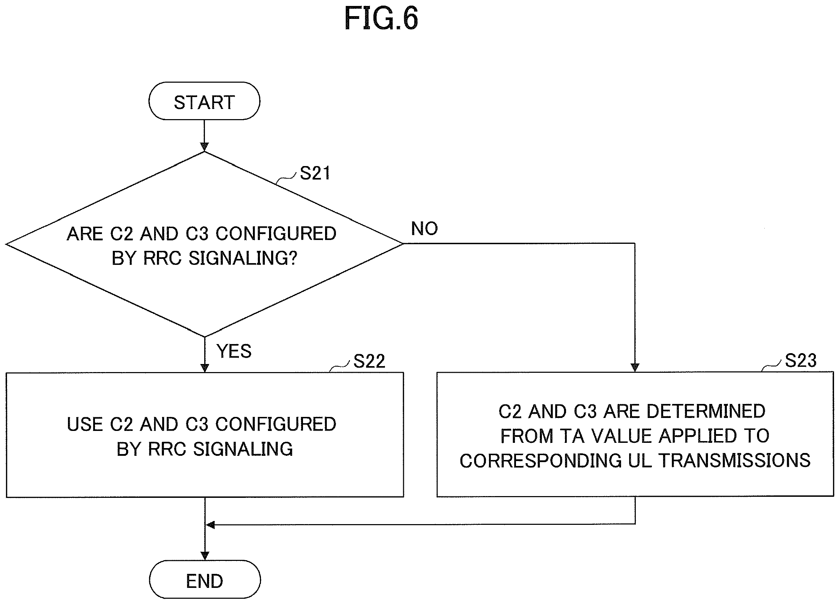

Fig. 6 is a flowchart for illustrating an operation example (2) for the terminal 20 in an embodiment of the present invention. At step S21, the terminal 20 determines whether C2 and C3 are configured by RRC signalling. If these are configured (YES at S21), the process proceeds to step S22. If these are not configured (NO at S21), the process proceeds to step S23.

At step S22, the terminal 20 uses C2 and C3 configured by the RRC signalling for determining the CP extension value. At step S23, the terminal 20 determines the CP extension value from a TA value to be applied for a corresponding UL transmission.

For example, C2 may be a maximum value satisfying "C2 * symbol length - 16 μs - TA < symbol length." C3 may be a maximum value satisfying "C3 * symbol length - 25 μs - TA < symbol length."

Furthermore, for example, C2 may be a minimum value satisfying "0 < C2 * symbol length - 16 μs - TA." C3 may be a minimum value satisfying "0 < C3 * symbol length - 25 μs - TA."

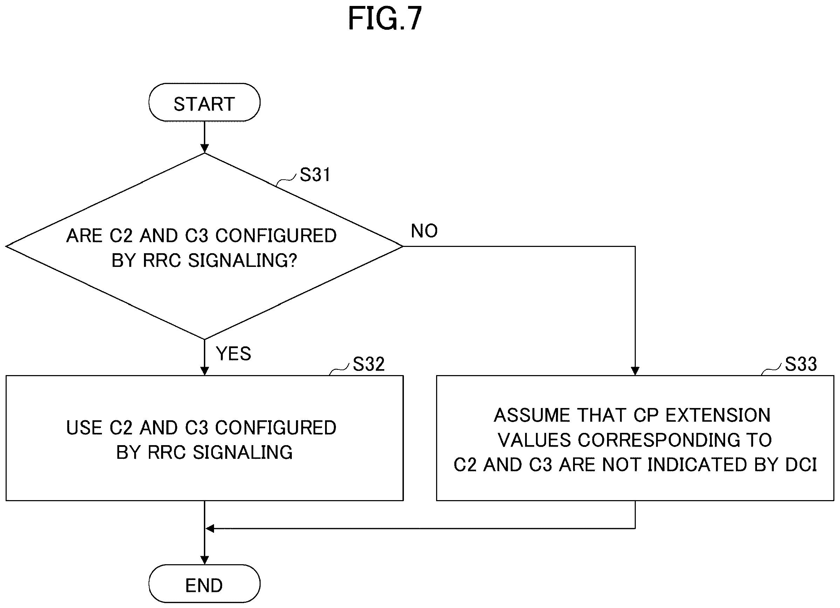

Fig. 7 is a flowchart for illustrating an operation example (3) for the terminal 20 in an embodiment of the present invention. At step S31, the terminal 20 determines whether C2 and C3 are configured by RRC signalling. If these are configured (YES at S31), the process proceeds to step S32. If these are not configured (NO at S31), the process proceeds to step S33.

At step S32, the terminal 20 uses C2 and C3 configured by the RRC signalling for determining the CP extension value. At step S33, the terminal 20 may assume that the CP extension value corresponding to C2 and C3 is not signalled by DCI. Table 3 is an example of a CP extension value signalled by DCI.

[Table 3]

| Bit field mapped to index | Channel Access Type | CP extension |
|---|---|---|
| 0 | Type2C-ULChannelAccess defined in [subclause 4.2.1.2.3 in 37.213] | C2*symbol length - 16 us - TA |
| 1 | Type2A-ULChannelAccess defined in [subclause 4.2.1.2.1 in 37.213] | C3*symbol length - 25 us - TA |
| 2 | Type2A-ULChannelAccess defined in [subclause 4.2.1.2.1 in 37.213] | C1*symbol length - 25 us |
| 3 | Type1-ULChannelAccess defined in [subclause 4.2.1.1 in 37.213] | 0 |

As shown in Table 3, a CP extension value corresponding to C2 is index "0", ant the CP extension value corresponding to C3 is index "1." Accordingly, for an indication of a CP extension value using DCI, the terminal 20 may assume that indexes "0" and "1" are not to be signalled. Furthermore, while setting a length of the bit field to 1 bit, the index "2" or "3" may be signalled.

The channel access type (LBT type) shown in Table 3 is a type of a channel access method such that the terminal 20 uses a random time period or a fixed time period for determining that a sensed slot is idle, prior to a UL transmission. The channel access type 1 corresponds to "Cat 4," the channel access type 2A corresponds to "Cat2 - 25 μs," and the channel access type 2C corresponds to "Cat1 - 16 μs."

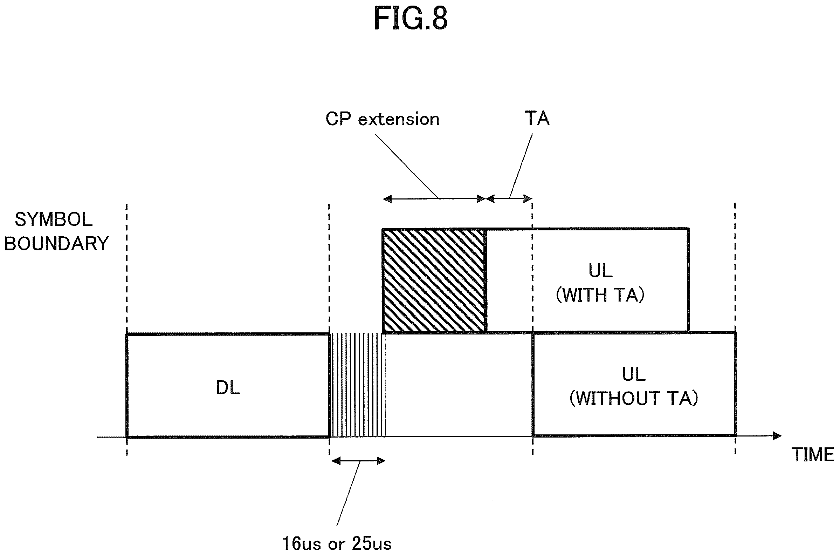

FIG. 8 is a diagram for illustrating an example of a CP extension in an embodiment of the present invention (here, 16 μs or 25 μs + TA is less than or equal to 1 symbol length). When a CP extension value is set as shown in Fig.

8, 16 $\mu$s or 25 $\mu$s + the CP extension value + TA becomes 1 symbol length. Namely, the CP extension value = 1 symbol length - 16 $\mu$s or 25 $\mu$s - TA is obtained. When a greater CP extension value is set, the CP extension value may be a value obtained by increasing the above-described first term in the right side in units of 1 symbol.

According to the above-described embodiments, even if C2 and C3 are not configured by RRC signalling, the terminal 20 can determine a CP extension value by determining C2 and C3, and execute a UL transmission to which the CP extension is applied. Furthermore, even if C2 and C3 are not configured by RRC signalling, the terminal 20 can assume that a CP extension value using C2 and C3 is not signalled, and can obtain a CP extension value from an indication by the base station 10 with a small bit length.

Namely, in a radio communication system, a Cyclic Prefix extension value (CP extension value) can be determined and the CP extension value can be applied to communication.

As for a DCI format 1_0 (fallback DL assignment) and a DCI format 1_1 (non-fallback DL assignment), a same PUCCH transmission may be indicated by a plurality of DCIs (a PUCCH resource indicator and a PDSCH-to-HARQ_feedback timing indicator).

A DCI format 1_0 indicates a channel access type (Channel Access type)/a CP extension value (CP extension value) to be applied to a PUCCH using ChannelAccess-CPext (2 bits).

A DCI format 1_0 indicates a channel access type (Channel Access type)/a CP extension value (CP extension value) to be applied to a PUCCH using ChannelAccess-CPext (2 bits).

A DCI format 1_1 indicates a channel access type (Channel Access type)/a CP extension value (CP extension value) to be applied to a UL transmission using ChannelAccess-CPext (0 to 4 bits: RRC configurable).

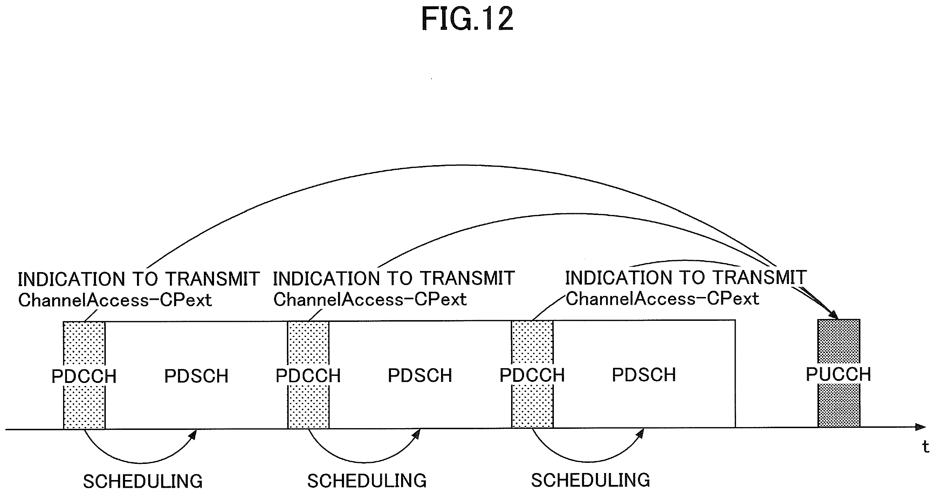

Fig. 12 is a diagram illustrating an example of a case in which a plurality of DCIs indicates Channel access types/CP extension values for the same PUCCH. As illustrated in the example of Fig. 12, when the plurality of DCIs indicates Channel access types/CP extension values to the same PUCCH, an operation of the terminal 20 upon receiving the plurality of channel access types and/or the plurality of CP extension values indicated by the plurality of DCIs is unclear.

(Problem)

There is a need for a technique for an NR-U PUCCH transmission with which the terminal 20 can configure an appropriate Channel access type/an appropriate CP extension value for the PUCCH when a plurality of DCIs indicates Channel access types and CP extension values for the same PUCCH.

(Proposal 1)

When a plurality of DCIs indicates a plurality of channel access types and/or a plurality of CP extension values for the same PUCCH, the terminal 20 may assume that channel access types and/or CP extension values indicated by DCIs of the plurality of DCIs are the same channel access type and/or the same CP extension value.

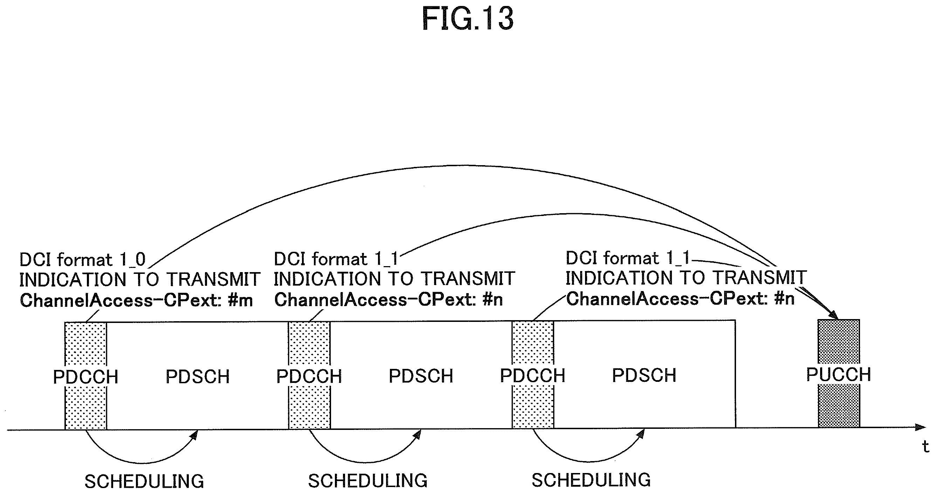

Fig. 13 is a diagram illustrating an example of a case in which, for the same PUCCH transmission by the terminal 20, a plurality of DCIs indicates channel access types/CP extension values. In the example of Fig. 13, for a specific PUCCH transmission by the terminal 20, among a plurality of indexes corresponding to a first plurality of combinations of channel access types and CP extension values, only the index #m may be indicated by the DCI format 1_0. Furthermore, in the example of Fig. 13, for the specific PUCCH transmission by the terminal 20, among a plurality of indexes corresponding to a second plurality of combinations of channel access types and CP extension values, only the index #n may be indicated by the DCI format 1_1. Namely, among a plurality of different types of DCI, for DCI format 1_0, only the index #m may be indicated to the terminal 20. Furthermore, among a plurality of different types of DCI, for DCI format 1_1, only the index #n may be indicated.

For example, when a plurality of DCIs indicates channel access types/CP extension values for the same PUCCH transmission by the terminal 20, a combination of a channel access type and a CP extension value specified by the index #m indicated to the terminal 20 may be the same as a combination of a channel access type and a CP extension value specified by the index #n indicated to the terminal 20. Alternatively, for example, a combination of a channel access type and a CP extension value specified by the index #m indicated to the terminal 20 may be different from a combination of a channel access type and a CP extension value specified by the index #n indicated to the terminal 20.

For example, when a combination of a channel access type and a CP extension value specified by the index #m indicated to the terminal 20 is the same as a combination of a channel access type and a CP extension value specified by the index #n indicated to the terminal 20, the terminal 20 may apply the combination of the channel access type and the CP extension value corresponding to the indicated index #m and index #n to a data transmission on a PUCCH.

Furthermore, for example, when a combination of a channel access type and a CP extension value specified by the index #m indicated to the terminal 20 is different from a combination of a channel access type and a CP extension value specified by the index #n indicated to the terminal 20, the terminal 20 may select one index from the index #m and the index #n based on prespecified priority, and the terminal 20 may apply a combination of a channel access type and a CP extension value specified by the selected index to a data transmission on a PUCCH. Priority may be defined between the index #n indicated by the DCI format 1_1 and the index #m indicated by the DCI format 1_0 (for example, priority may be specified by a specification). The priority may be configured for the terminal 20 by the base station 10 by RRC signaling or the like.

(Proposal 2)

When a plurality of DCIs indicates a plurality of channel access types and/or a plurality of CP extension values for the same PUCCH, the terminal 20 may apply a channel access type and/or a CP extension value indicated by the latest DCI among the plurality of DCIs to the PUCCH.

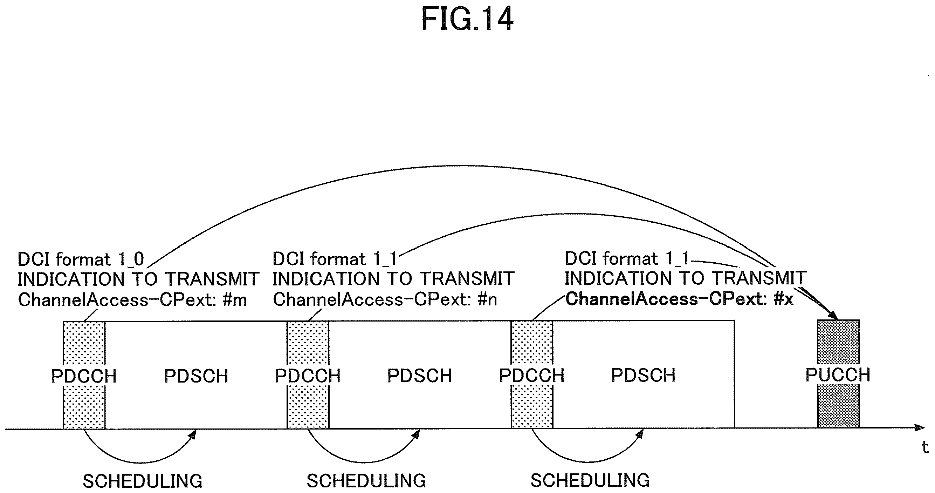

Fig. 14 is a diagram illustrating an example of a case in which a plurality of DCIs indicates channel access types/CP extension values for the same PUCCH transmission by the terminal 20. In the example of Fig. 14, the DCI format 1_0 indicates the index #m for the specific PUCCH transmission by the terminal 20, among a plurality of indexes corresponding to a first plurality of combinations of channel access types and CP extension values. Next, in the example of Fig. 14, the DCI format 1_1 indicates the index #n for the specific PUCCH transmission by the terminal 20, among a plurality of indexes corresponding to a second plurality of combinations of channel access types and CP extension values. Subsequently, in the example of Fig. 14, the DCI format 1_1 indicates the index #x for the specific PUCCH transmission by the terminal 20, among a plurality of indexes corresponding to the second plurality of combinations of channel access types and CP extension values.

In the example of Fig. 14, the terminal 20 may apply a combination of a channel access type and a CP extension value corresponding to the index #x of the last indicated DCI in time (e.g., the DCI received immediately before the PUCCH transmission) to a data transmission on the PUCCH, among a plurality of DCIs indicating the PUCCH transmission.

Note that, although the terminal 20 applies the index of the last indicated DCI in time among the plurality of DCIs indicating the PUCCH transmission in the example of Fig. 14, embodiments are not limited to this example. For example, the terminal 20 may apply an index of the first indicated DCI in time among the plurality of DCIs indicating the PUCCH transmission. For example, the terminal 20 may limit the plurality of DCIs indicating the PUCCH transmission to DCI with a specific format, and the terminal 20 may apply an index of the last indicated DCI in time (for example, the terminal 20 may apply an index of the last indicated DCI format 1_1 in time, among DCI formats 1_1).

(Device Configurations)

Next, examples of functional configurations of the base station 10 and the terminal 20 for executing the above-described processing and operation are described. The base station 10 and the terminal 20 include functions for executing the above-described embodiments. However, each of the base station 10 and the terminal 20 may only provide with a part of the functions in the embodiments.

<Base station 10>

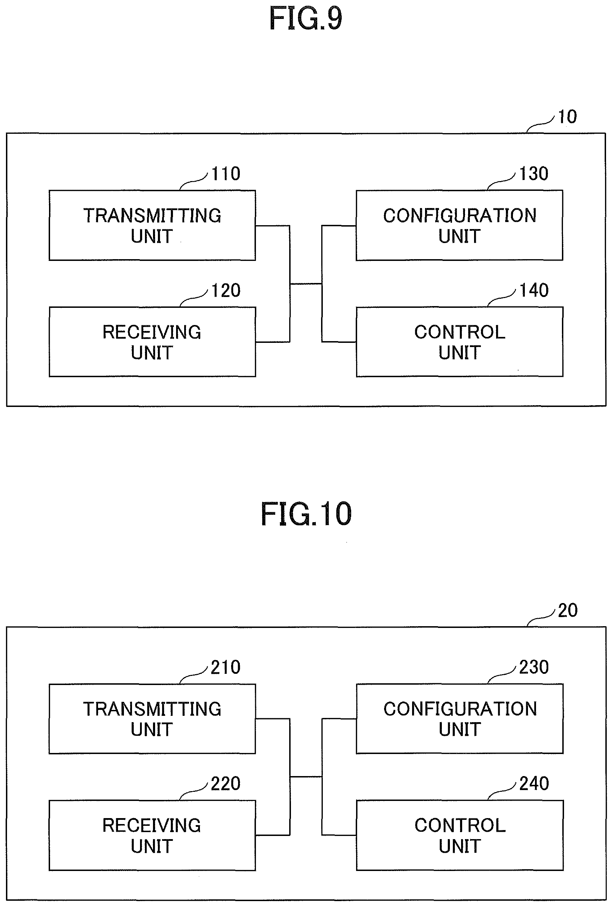

Fig. 9 is a diagram illustrating an example of a functional configuration of the base station 10 in an embodiment of the present invention. As illustrated in Fig. 9, the base station 10 includes a transmitting unit 110; a receiving unit 120; a configuration unit 130; and a control unit 140. The functional configuration illustrated in Fig. 9 is merely an example. Functional division and names of functional units may be any division and names, provided that operation according to the embodiments of the present invention can be executed.

The transmitting unit 110 includes a function for generating a signal to be transmitted to the terminal 20 and transmitting the signal through radio. The transmitting unit 110 transmits an inter network node message to another network node. The receiving unit 120 includes a function for receiving various signals transmitted from the terminal 20 and retrieving, for example, information of a higher layer from the received signals. The transmitting unit 110 has a function to transmit NR-PSS, NR-SSS, NR-PBCH, DL/UL control signals, and the like, to the terminal 20. The receiving unit 120 receives an inter network node message from another network node.

The configuration unit 130 stores preconfigured configuration information and various types of configuration information to be transmitted to the terminal 20. Content of the configuration information is, for example, a configuration on an NR-U communication and the like.

As described in the embodiments, the control unit 140 performs control on a UL grant. A functional unit related to signal transmission in the control unit 140 may be included in the transmitting unit 110, and a functional unit related to signal reception in the control unit 140 may be included in the receiving unit 120.

<Terminal 20>

FIG. 10 is a diagram illustrating an example of a functional configuration of a terminal 20 according to an embodiment of the present invention. As illustrated in FIG. 10, the terminal 20 includes a transmitting unit 210; a receiving unit 220; a configuration unit 230; and a control unit 240. The functional configuration illustrated in FIG. 10 is only one example. The functional division and the names of the names of the functional units may be any division and names, provided that operations of the embodiments of the present invention can be executed.

The transmitting unit 210 creates a transmission signal from transmission data and transmits the transmission signal through radio. The receiving unit 220 receives various signals through radio and retrieves higher layer signals from the received physical layer signals. The receiving unit 220 has a function to receive NR-PSS, NR-SSS, NR-PBCH, DL/UL/SL control signals, etc., transmitted from the base station 10. For example, the transmitting unit 210 transmits Physical Sidelink Control Channel (PSCCH), Physical Sidelink Shared Channel (PSSCH), Physical Sidelink Discovery Channel (PSDCH), Physical Sidelink Broadcast Channel (PSBCH), and the like to another terminal 20 as D2D communication, and the receiving unit 220 receives PSCCH, PSSCH, PSDCH, PSBCH, and the like from another terminal 20.

The configuration unit 230 stores various types of configuration information received from the base station 10 by the receiving unit 220. The configuration unit 230 also stores preconfigured configuration information. The content of the configuration information is, for example, a configuration on an NR-U communication, and the like.

As described in the embodiments, the control unit 240 performs control for executing transmission with LBT based on a UL grant. Furthermore, the control unit 240 controls a UL transmission to which a CP extension is applied in accordance with a configuration. A functional unit related to signal transmission in the control unit 240 may be included in the transmitting unit 210, and a functional unit related to signal reception in the control unit 240 may be included in the receiving unit 220.

(Hardware configuration)

The block diagrams (FIG. 9 and FIG. 10) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire or radio) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

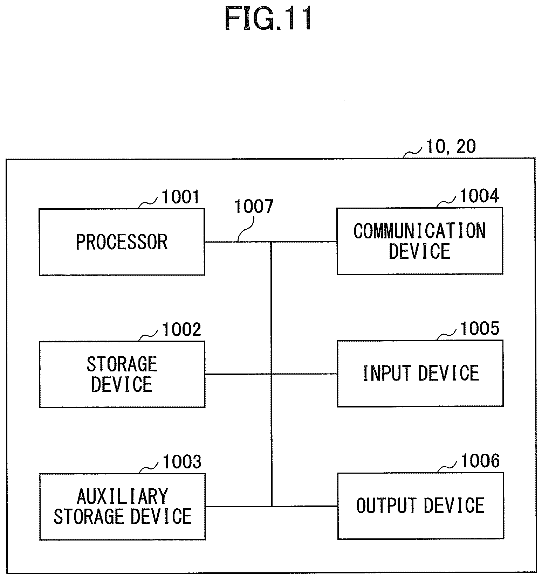

For example, the base station 10, the terminal 20, or the like in an embodiment of the present invention may function as a computer for performing a process of radio communication method according to the present disclosure. Fig. 11 is a diagram illustrating an example of a hardware configuration of the base station 10 and the terminal 20 according to an embodiment of the present disclosure. Each of the base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, device, unit, or the like. The hardware configuration of each of the base station 10 and the terminal 20 may be configured to include each device depicted, or may be configured without including some devices.

Each function in each of the base station 10 and the terminal 20 is implemented such that predetermined software (program) is read on hardware such as the processor 1001, the storage device 1002 and the like, and the processor 1001 performs an operation and controls communication by the communication device 1004 and at least one of reading and writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the above-described control unit 140, the control unit 240, and the like may be implemented by the processor 1001.

Furthermore, the processor 1001 reads a program (program code), a software module, data, or the like from at least one of the auxiliary storage device 1003 and the communication device 1004 out to the storage device 1002, and executes various types of processes according to them. A program causing a computer to execute at least some of the operations described in the above embodiments is used as the program. For example, the control unit 140 of the base station 10 illustrated in FIG. 9 may be implemented by a control program which is stored in the storage device 1002 and operates on the processor 1001. Furthermore, for example, the control unit 240 of the terminal 20 illustrated in Fig. 10 may be implemented by a control program which is stored in the storage device 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The above-described storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as a "network device," a "network controller," a "network card," a "communication module," or the like. The communication device 1004 may be configured to include a high frequency switch, a duplexer, a filter, a frequency synthesizer, and the like to implement at least one of frequency division duplex (FDD) and time division duplex(TDD). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the storage device 1002 are connected by the bus 1007 to communicate information with each other. The bus 1007 may be configured with a single bus or may be configured with different buses between the devices.

Furthermore, each of the base station 10 and the terminal 20 may be configured to include hardware such as a microprocessor, a digital signal processor (DSP), an application specific integrated circuit (ASIC), a programmable logic device (PLD), or a field programmable gate array (FPGA), or all or some of the functional blocks may be implemented by hardware. For example, the processor 1001 may be implemented by at least one of these pieces of hardware.

(Conclusion of the embodiments)

As described above, according to the embodiments of the present invention, there is provided a terminal including a receiving unit that receives, from a base station, information for assigning an uplink transmission; a control unit that determines a CP extension value when the information is received and when a parameter for calculating the CP extension value is not configured by the base station; and a transmitting unit that executes the uplink transmission by applying the determined CP extension value.

According to the above-described configuration, even if C2 and C3 are not configured by RRC signalling, the terminal 20 can determine a CP extension value by determining C2 and C3 and can execute an UL transmission to which a CP extension is applied. Furthermore, even if C2 and C3 are not configured by RRC signalling, the terminal 20 can assume that a CP extension value using C2 and C3 are not signalled and can obtain a CP extension value from an indication by the base station 10 with a small bit length. Namely, in a radio communication system, a Cyclic Prefix extension (CP extension) value can be determined and can be applied to communication.

The control unit may determine the parameter and may calculate, as the CP extension value, a time period obtained by subtracting a time period defined by a timing advance value and a predetermined time period from a time period that is an integral multiple of a symbol length based on the determined parameter. According to the above-described configuration, even if C2 and C3 are not configured by RRC signalling, the terminal 20 can determine a CP extension value by determining C2 and C3 and can execute an UL transmission to which a CP extension is applied.

The control unit may determine the parameter to a predefined value, and may calculate the CP extension value based on the parameter. According to the above-described configuration, even if C2 and C3 are not configured by RRC signalling, the terminal 20 can determine a CP extension value by determining C2 and C3 and can execute an UL transmission to which a CP extension is applied.

The control unit may determine the parameter based on a timing advance value and may calculate the CP extension value based on the parameter. According to the above-described configuration, even if C2 and C3 are not configured by RRC signalling, the terminal 20 can determine a CP extension value by determining C2 and C3 and can execute an UL transmission to which a CP extension is applied.

The control unit may assume that the CP extension value corresponding to the parameter is not signalled from the base station. Even if C2 and C3 are not configured by RRC signalling, the terminal 20 can assume that a CP extension value using C2 and C3 are not signalled and can obtain a CP extension value from an indication by the base station 10 with a small bit length.

Furthermore, according to the embodiments of the present invention, there is provided a communication method in which a terminal executes a receiving procedure of receiving, from a base station, information for assigning an uplink transmission; a control procedure of determining a CP extension value, when the information is received and when a parameter for calculating the CP extension value is not configured by the base station; and a transmitting procedure of executing the uplink transmission by applying the determined CP extension value.

According to the above-described configuration, even if C2 and C3 are not configured by RRC signalling, the terminal 20 can determine a CP extension value by determining C2 and C3 and can execute an UL transmission to which a CP extension is applied. Furthermore, even if C2 and C3 are not configured by RRC signalling, the terminal 20 can assume that a CP extension value using C2 and C3 are not signalled and can obtain a CP extension value from an indication by the base station 10 with a small bit length. Namely, in a radio communication system, a Cyclic Prefix extension (CP extension) value can be determined and can be applied to communication.

A terminal includes a receiving unit that receives, from a base station, a plurality of signals for assigning a resource for an uplink transmission; a control unit that configures, upon receiving the plurality of signals, at least one of a channel access type for the uplink transmission or a CP extension value for the uplink transmission based on an index included in one or more signals of the plurality of signals; and a transmitting unit that executes the uplink transmission by applying the at least one of the configured channel access type or the configured CP extension value. Channel access types and CP extension values specified by a plurality of indexes included in the plurality of signals may be identical.

The control unit may configure the at least one of the channel access type or the CP extension value for the uplink transmission based on an index included in a specific signal of the plurality of signals.

The specific signal may be a first received signal or a last received signal in a time direction, among the plurality of signals. A communication method by a terminal, wherein the method includes receiving, from a base station, a plurality of signals for assigning a resource for an uplink transmission; configuring, upon receiving the plurality of signals, at least one of a channel access type for the uplink transmission or a CP extension value for the uplink transmission based on an index included in one or more signals of the plurality of signals; and executing the uplink transmission by applying the at least one of the configured channel access type or the configured CP extension value, is provided. A base station includes a transmitting unit that transmits a plurality of signals for assigning a resource for an uplink transmission; and a receiving unit that receives the uplink transmission executed by applying at least one of a channel access type or a CP extension value, the at least one of the channel access type or the CP extension value being configured based on an index included in one or more signals included in the plurality of signals.

According to the above-described configurations, for an NR-U PUCCH transmission, a technique is provided with which a terminal can configure, when Channel access types and CP extension values are signalled with a plurality of DCIs for the same PUCCH, an appropriate Channel access type/an appropriate CP extension value for the PUCCH.

(Supplemental embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station 10 and the terminal 20 are described using the functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be provided by any other method. For example, the notification of information may be given by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The processing procedures, the sequences, the flowcharts, and the like of the respective aspects/embodiments described in this specification may be reversed in order provided that there is no contradiction. For example, the method described in the present disclosure presents elements of various steps with an exemplary order and is not limited to a presented specific order.

In this specification, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case is exemplified above in which there is one network node other than the base station 10. The one network node may be a combination of a plurality of other network nodes (e.g., MME and S-GW).

Information, a signal, or the like described in the present disclosure may be output from a higher layer (or a lower layer) to a lower layer (or a higher layer layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination in the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in the present disclosure may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or any combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names assigned to the various channels and the information elements are not limited in any respect.

In the present disclosure, the terms "base station (BS)," "radio base station," "base station device," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macro-cell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the terminal is replaced with communication between a plurality of terminals 20 (for example, which may be referred to as device-to-device (D2D) or vehicle-to-everything (V2X)). In this case, the terminal 20 may have the functions of the base station 10 described above. Further, the terms "uplink" and "downlink" may be replaced with terms (for example, "side") corresponding to inter-terminal communication. For example, an uplink channel, a downlink channel, or the like may be replaced with side channels.

Similarly, the user terminal in the present disclosure may be replaced with the base station. In this case, the base station may have the functions of the above-mentioned user terminal.

The terms "determination(determining)" and "decision (determining)" used in the present specification may include various types of operations. The "determination" and "decision" may include deeming "judging," "calculating," "computing," "processing," "deriving," "investigating," "looking up (for example, searching in a table, a database, or another data structure)," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case of using in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Furthermore, "means" in the configuration of each of the above devices may be replaced with "unit," "circuit," "device," or the like.

When "include," "including," and variations thereof are used in the present disclosure, these terms are intended to be comprehensive, similar to a term "provided with (comprising)." Further, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each terminal 20) to each terminal 20 in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is provided, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Furthermore, a long TTI (for example, a normal TTI, a subframe, or the like) may be replaced with a TTI having a time length exceeding 1 ms, and a short TTI (for example, a reduced TTI or the like) may be replaced with a TTI having a TTI length that is less than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Furthermore, a time domain of an RB may include one or more symbols and may be a length of one slot, one mini slot, one subframe, or one TTI. One TTI, one subframe, or the like may be formed of one or more resource blocks.

Furthermore, one or more RBs may be referred to as a physical resource block (PRB), a sub carrier group (SCG), a resource element group (REG), a PRB pair, an RB pair, or the like.

Furthermore, the resource block may be formed of one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and the UE need not assume that predetermined signals/channels are transmitted and received outside an active BWP. Furthermore, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, a term "A and B are different" may mean "A and B are different from each other." Furthermore, the term may mean "each of A and B is different from C." Terms such as "separated," "coupled," or the like may also be interpreted similarly to "different."

Each aspect/embodiment described in this specification may be used alone, in combination, or may be switched in accordance with the execution. Furthermore, notification of predetermined information (for example, notification of "being X") is not limited to notification performed explicitly, but may be performed implicitly (for example, not notifying the predetermined information).

Note that, in the present disclosure, C2 or C3 is an example of a parameter for calculating a CP extension value.

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

This international patent application is based on and claims priority to Japanese Patent Application No. 2020-029585 filed on February 25, 2020, and the entire content of Japanese Patent Application No. 2020-029585 is incorporated herein by reference.

LIST OF REFERENCE SYMBOLS

    10 base station
    110 transmitting unit
    120 receiving unit
    130 configuration unit
    140 control unit
    20 terminal
    210 transmitting unit
    220 receiving unit
    230 configuration unit
    240 control unit
    1001 processor
    1002 storage device
    1003 auxiliary storage device

1004 communication device
1005 input device
1006 output device

**Claims**

1.  A terminal comprising:

    a receiving unit that receives, from a base station, a plurality of signals for assigning a resource for an uplink transmission;
    a control unit that configures, upon receiving the plurality of signals, at least one of a channel access type for the uplink transmission or a CP extension value for the uplink transmission based on an index included in one or more signals of the plurality of signals; and
    a transmitting unit that executes the uplink transmission by applying the at least one of the configured channel access type or the configured CP extension value.

2.  The terminal of claim 1, wherein channel access types and CP extension values specified by a plurality of indexes included in the plurality of signals are identical.

3.  The terminal of claim 1, wherein the control unit configures the at least one of the channel access type or the CP extension value for the uplink transmission based on an index included in a specific signal of the plurality of signals.

4.  The terminal of claim 3, wherein the specific signal is a first received signal or a last received signal in a time direction, among the plurality of signals.

5.  A communication method by a terminal, the method comprising:

    receiving, from a base station, a plurality of signals for assigning a resource for an uplink transmission;
    configuring, upon receiving the plurality of signals, at least one of a channel access type for the uplink transmission or a CP extension value for the uplink transmission based on an index included in one or more signals of the plurality of signals; and
    executing the uplink transmission by applying the at least one of the configured channel access type or the configured CP extension value.

6.  A base station comprising:

    a transmitting unit that transmits a plurality of signals for assigning a resource for an uplink transmission; and
    a receiving unit that receives the uplink transmission executed by applying at least one of a channel access type or a CP extension value, the at least one of the channel access type or the CP extension value being configured based on an index included in one or more signals included in the plurality of signals.

FIG.1

# FIG.2

# FIG.3

Multi-TTI grant

PDCCH

A · B · C · D

t

PUSCH : PUSCH : PUSCH : PUSCH

LBT →NG LBT →NG LBT →NG LBT NG

OK OK OK OK No transmission

Transmit 4 PUSCHs

Transmit 3 PUSCHs

Transmit 2 PUSCHs

Transmit 1 PUSCH

EP 4 114 066 A1

# FIG.4

BASE STATION  10

TERMINAL  20

HIGHER LAYER SIGNALING
S1

PDCCH
S2

PUSCH
S3

# FIG.5

START

S11

ARE C2 AND C3 CONFIGURED
BY RRC SIGNALING?

NO

YES

S12

USE C2 AND C3 CONFIGURED
BY RRC SIGNALING

S13

ASSUME THAT C2 AND C3
ARE FIXED VALUES

END

EP 4 114 066 A1

# FIG.6

START

S21

ARE C2 AND C3 CONFIGURED
BY RRC SIGNALING?

NO

YES

S22

USE C2 AND C3 CONFIGURED
BY RRC SIGNALING

S23

C2 AND C3 ARE DETERMINED
FROM TA VALUE APPLIED TO
CORRESPONDING UL TRANSMISSIONS

END

# FIG.7

START

S31
ARE C2 AND C3 CONFIGURED
BY RRC SIGNALING?

NO

YES

S32
USE C2 AND C3 CONFIGURED
BY RRC SIGNALING

S33
ASSUME THAT CP EXTENSION
VALUES CORRESPONDING TO
C2 AND C3 ARE NOT INDICATED BY DCI

END

EP 4 114 066 A1

# FIG.8

EP 4 114 066 A1

# FIG.9

```
                                                           ⌒10
┌────────────────────────────────────────────────────────────┐
│                                                             │
│       ⌒110                              ⌒130                 │
│   ┌─────────────────┐              ┌─────────────────┐       │
│   │  TRANSMITTING   │              │  CONFIGURATION  │       │
│   │     UNIT        │              │     UNIT        │       │
│   └─────────────────┘              └─────────────────┘       │
│                                                             │
│       ⌒120                              ⌒140                 │
│   ┌─────────────────┐              ┌─────────────────┐       │
│   │   RECEIVING     │              │    CONTROL      │       │
│   │     UNIT        │              │     UNIT        │       │
│   └─────────────────┘              └─────────────────┘       │
│                                                             │
└────────────────────────────────────────────────────────────┘
```

# FIG.10

```
                                                           ⌒20
┌────────────────────────────────────────────────────────────┐
│                                                             │
│       ⌒210                              ⌒230                 │
│   ┌─────────────────┐              ┌─────────────────┐       │
│   │  TRANSMITTING   │              │  CONFIGURATION  │       │
│   │     UNIT        │              │     UNIT        │       │
│   └─────────────────┘              └─────────────────┘       │
│                                                             │
│       ⌒220                              ⌒240                 │
│   ┌─────────────────┐              ┌─────────────────┐       │
│   │   RECEIVING     │              │    CONTROL      │       │
│   │     UNIT        │              │     UNIT        │       │
│   └─────────────────┘              └─────────────────┘       │
│                                                             │
└────────────────────────────────────────────────────────────┘
```

# FIG.11

~ 10, 20

~ 1001  
**PROCESSOR**

1007

~ 1004  
**COMMUNICATION DEVICE**

~ 1002  
**STORAGE DEVICE**

~ 1005  
**INPUT DEVICE**

~ 1003  
**AUXILIARY STORAGE DEVICE**

~ 1006  
**OUTPUT DEVICE**

# FIG.12

INDICATION TO TRANSMIT
ChannelAccess-CPext

INDICATION TO TRANSMIT
ChannelAccess-CPext

INDICATION TO TRANSMIT
ChannelAccess-CPext

PDCCH    PDSCH    PDCCH    PDSCH    PDCCH    PDSCH    PUCCH

t

SCHEDULING    SCHEDULING    SCHEDULING

# FIG.13

DCI format 1_0
INDICATION TO TRANSMIT
ChannelAccess-CPext: #m

DCI format 1_1
INDICATION TO TRANSMIT
ChannelAccess-CPext: #n

DCI format 1_1
INDICATION TO TRANSMIT
ChannelAccess-CPext: #n

| PDCCH | PDSCH | PDCCH | PDSCH | PDCCH | PDSCH | PUCCH |

SCHEDULING    SCHEDULING    SCHEDULING

t

EP 4 114 066 A1

# FIG.14

DCI format 1_0
INDICATION TO TRANSMIT
ChannelAccess-CPext: #m

DCI format 1_1
INDICATION TO TRANSMIT
ChannelAccess-CPext: #n

DCI format 1_1
INDICATION TO TRANSMIT
ChannelAccess-CPext: #x

| PDCCH | PDSCH | PDCCH | PDSCH | PDCCH | PDSCH | PUCCH |

t

SCHEDULING          SCHEDULING          SCHEDULING

## INTERNATIONAL SEARCH REPORT

| International application No. |
| --- |
| PCT/JP2021/004676 |

### A. CLASSIFICATION OF SUBJECT MATTER

H04W 16/14(2009.01)i; H04W 72/04(2009.01)i; H04W 72/12(2009.01)i; H04L 27/26(2006.01)i
FI: H04W72/12 150; H04W72/04 136; H04W16/14; H04L27/26 112

According to International Patent Classification (IPC) or to both national classification and IPC

### B. FIELDS SEARCHED

Minimum documentation searched (classification system followed by classification symbols)
H04W16/14; H04W72/04; H04W72/12; H04L27/26

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | ERICSSON, Channel Access Procedures[online], 3GPP TSG RAN WG1 #100_e R1-2000826, 15 February 2020, section 2.1 | 1-6 |
| Y | US 2019/0342030 A1 (QUALCOMM INCORPORATED) 07 November 2019 (2019-11-07) paragraph [0103] | 1-2, 5-6 |
| Y | MOTOROLA MOBILITY, LENOVO, Feature lead summary for NR-U DL Signals and Channels[online], 3GPP TSG RAN WG1 #99 R1-1913055, 22 November 2019, section 3.1 | 1, 3-6 |

☐ Further documents are listed in the continuation of Box C.　　☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 April 2021 (14.04.2021) | 27 April 2021 (27.04.2021) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2021/004676 |

| Patent Documents referred in the Report | Publication Date | Patent Family | Publication Date |
| --- | --- | --- | --- |
| US 2019/0342030 A1 | 07 Nov. 2019 | WO 2019/213216 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020029585 A

**Non-patent literature cited in the description**

- *3GPP TS 38.331 V15.8.0,* December 2019
- *3GPP TS 38.212 V16.0.0,* December 2019
- *3GPP TS 38.213 V16.0.0,* December 2019
- *3GPP TS 37.213 V16.0.0,* December 2019